# EUROPEAN PATENT APPLICATION

(11) **EP 4 506 960 A1**
(43) Date of publication of application: **12.02.2025**
(21) Application number: 23784892.4
(22) Date of filing: 22.03.2023
(51) Int. Cl.: G21C 15/18, G21D 3/06

(54) **METHOD FOR DEALING WITH LOSS OF COOLANT ACCIDENT IN NUCLEAR POWER PLANT, AND SYSTEM THEREFOR**

(30) Priority: 07.04.2022 KR 20220043390
(71) Applicant: Korea Hydro & Nuclear Power Co., Ltd, Gyeongju-si, Gyeongsangbuk-do 38120 (KR)
(72) Inventor: OH, Ji Yong, Daejeon 34101 (KR); LEE, Keun Seong, Daejeon 34101 (KR); KWON, Sun Guk, Daejeon 34101 (KR)
(74) Representative: Habermann, Hruschka & Schnabel
(86) International application number: PCT/KR2023/003790
(87) International publication number: WO 2023/195664

(57) **Abstract**

The present invention relates to a method for dealing with a loss of coolant accident in a nuclear power plant, and a system therefor. The method for dealing with a loss of coolant accident in a nuclear power plant, according to the present invention, comprises the steps of: determining a fracture size and a fracture position; determining an accident level on the basis of the determined fracture size and fracture position; and activating safeguards according to the accident level.

## Description

### Technical Field

The disclosure relates to a method of dealing with a loss-of-coolant accident in a nuclear power plant, and a system therefor.

### Background Art

One of the accidents difficult to deal with among accidents in the nuclear power plant is a loss-of-coolant accident, in particular, a large-scale loss-of-coolant accident in a broken cold leg.

When the loss-of-coolant accident occurs in the cold leg, a safety injection tank (SIT) (medium pressure) and a safety injection pump (SIP) (high pressure) are used to inject a coolant, but a significant amount of safety injection coolant flows directly out of a broken portion without passing through a core, thereby making no contribution to cooling.

Even the coolant injected into not the broken portion but the core cannot pass through the core due to steam pressure above the core, and thus a problem arises in that a water level in the core is not sufficiently maintained.

Therefore, it is important to quickly and accurately identify the loss-of-coolant accident and rapidly take an appropriate measure.

### Disclosure

### Technical Problem

Accordingly, an aspect of the disclosure is to provide a method of dealing with a loss-of-coolant accident in a nuclear power plant, and a system therefor.

### Technical Solution

An aspect of the disclosure is achieved by a method of dealing with a loss-of-coolant accident in a nuclear power plant, the method including: identifying a break size and a break location; identifying an accident level based on the break size and break location; and operating safety feature based on the accident level.

The safety feature may include a pilot operated safety relief valve (POSRV), an emergency rapid depressurization valve (ERDV), a safety injection (SI), and a containment spray (CS).

The break size may be identified based on a decreasing rate of a water level of a pressurizer, and the break location may be identified based on a water level of a reactor head water level indicator.

The identification of the break location may include: identifying that a hot leg is broken upon the water level of the reactor head water level indicator being above a certain level, and identifying that a cold leg is broken upon the water level of the reactor head water level indicator being below a certain level.

The identification of the accident level may be based on a look-up table preset according to combinations of the break sizes and the break locations.

In the operation of the safety feature, the number of operating POSRVs, whether to operate the ERDV, the number of operating Sis, and the number of operating CSs may be varied depending on the accident level.

After identifying the accident level, the accident level may be verified based on a verification parameter including at least one of a core exit temperature, a radiation dose inside a containment building, a temperature inside the containment building, a pressure inside the containment building, a water level inside an intermediate storage tank, a safe injection flow rate, and a spray flow rate.

Another aspect of the disclosure is achieved by a system for dealing with a loss-of-coolant accident in a nuclear power plant, the system including: an input unit that receives a water level of a pressurizer and a water level of a reactor head water level indicator; an accident identification unit that identifies a break size based on a decreasing rate of the water level of the pressurizer, and identifies a break location based on the water level of the reactor head water level indicator; an accident level identification unit that identifies an accident level based on the break size and break location identified by the accident identification unit; and a safety feature operation unit that instructs safety feature to operate based on the accident level identified by the accident level identification unit.

The safety feature may include a pilot operated safety relief valve (POSRV), an emergency rapid depressurization valve (ERDV), a safety injection (SI), and a containment spray (CS).

The accident identification unit may identify that a hot leg is broken upon the water level of the reactor head water level indicator being above a certain level, and identify that a cold leg is broken upon the water level of the reactor head water level indicator being below a certain level.

The accident level identification unit may identify the accident level based on a look-up table preset according to combinations of the break sizes and the break locations.

The system may further include a verification unit that verifies the accident level based on a verification parameter comprising at least one of a core exit temperature, a radiation dose inside a containment building, a temperature inside the containment building, a pressure inside the containment building, a water level inside an intermediate storage tank, a safe injection flow rate, and a spray flow rate.

### Advantageous Effects

According to the disclosure, there are provided a method of dealing with a loss-of-coolant accident in a nuclear power plant, and a system therefor.

### Description of Drawings

FIG. 1 illustrates a coping system for a loss-of-coolant accident according to an embodiment of the disclosure,
FIG. 2 illustrates a nuclear power plant to which the disclosure is applied, and
FIG. 3 is a flowchart showing a method of dealing with a loss-of-coolant accident according to an embodiment of the disclosure.

### Mode for Invention

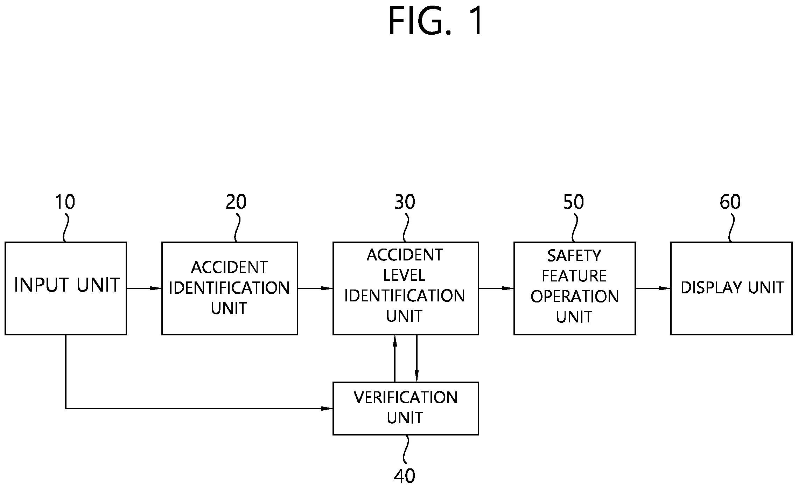

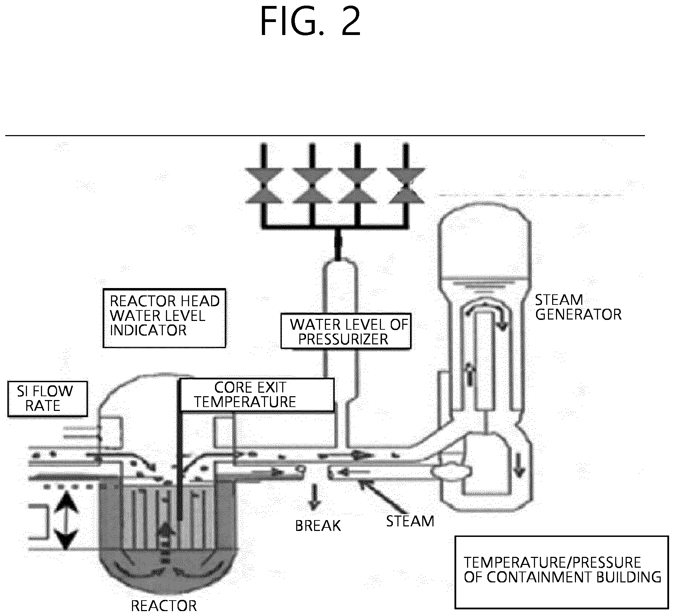

A coping system for a loss-of-coolant accident according to an embodiment of the disclosure will be described with reference to FIGS. 1 and 2.

FIG. 1 illustrates a coping system for a loss-of-coolant accident according to an embodiment of the disclosure, and FIG. 2 illustrates a nuclear power plant to which the disclosure is applied.

The coping system 1 includes an input unit 10, an accident identification unit 20, an accident level identification unit 30, a verification unit 40, a safety feature operation unit 50, and a display unit 60.

The input unit 10 receives a water level of a pressurizer and a water level of a reactor head water level indicator.

The accident identification unit 20 identifies a break size based on a decreasing rate of the received water level of the pressurizer and a break location based on the received water level of the reactor head water level indicator.

The accident level identification unit 30 identifies an accident level based on the break size and break location identified by the accident identification unit 20. To identify the accident level, a look-up table may be used.

The identified accident level is verified in the verification unit 40, and the verification unit 40 verifies the accident level based on a verification parameter including at least one of a core exit temperature, a radiation dose inside a containment building, a temperature inside the containment building, a pressure inside the containment building, a water level inside an intermediate storage tank, a safe injection flow rate, and a spray flow rate. The verification parameter may be input through the input unit 10.

The safety feature operation unit 50 instructs the safety feature to operate according to the accident level identified by the accident level identification unit. The safety feature includes a pilot operated safety relief valve (POSRV), an emergency rapid depressurization valve (ERDV), a safety injection (SI) and a containment spray (CS).

The display unit 60 displays input information, the break size, the break location, the accident level, the safety feature operation, etc. through a display device for an operator.

Below, a method of dealing with a loss-of-coolant accident according to the disclosure will be described in more detail.

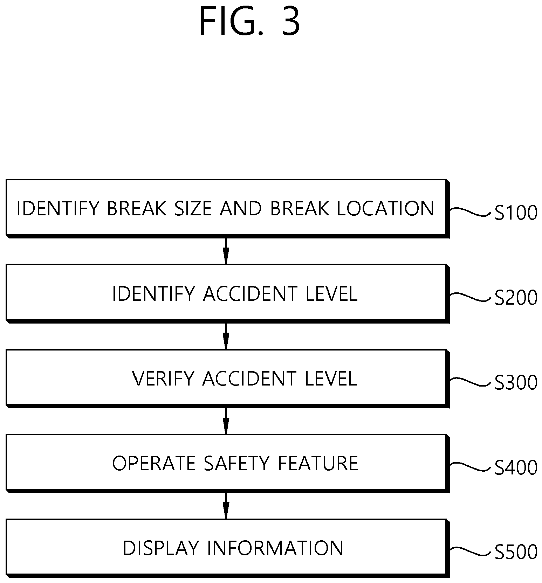

FIG. 3 is a flowchart showing a method of dealing with a loss-of-coolant accident according to an embodiment of the disclosure.

First, a break size and a break location are identified (S100).

The break size may be identified based on a decreasing rate of the water level of the pressurizer, and the break location may be identified based on the water level of the reactor head water level indicator.

The break size may be classified into, for example, small, medium, and large.

For example, when the decreasing rate of the water level of the pressurizer is less than 5% per second, it may be identified that the break size is small. When the decreasing rate is 5% to 20% per second, it may be identified that the break size is medium. When the decreasing rate is more than 20% per second, it may be identified that the break size is large.

In terms of identifying the break location, when the water level of the reactor head water level indicator is above a certain level, it is identified that a hot leg is broken. When the water level of the reactor head water level indicator is below the certain level, it is identified that a cold leg is broken.

For example, it is identified that the hot leg is broken when the reactor head water level indicator remains above 60%, and it is identified that the cold leg is broken when the reactor head water level indicator remains below 60%.

Next, the accident level is identified based on the identified break size and break location (S200).

The identification of the accident level may be performed using a look-up table in which combinations of the break sizes and the break locations are tabulated.

An example of the look-up table is shown in the following Table 1.

**[Table 1]**

| | Small break | Medium break | Large break |
|---|---|---|---|
| cold leg break | low and small | low and medium | low and large |
| hot leg break | high and small | high and medium | high and large |

The identified accident level undergoes a verification procedure (S300). To verify the accident level, the verification parameter is used. The verification parameter includes a verification parameter related to a reactor coolant system, a verification parameter related to identification of situations inside the containment building, and a verification parameter related to identification of operating states of engineered safety feature. Specifically, the verification parameter may include at least one of a core exit temperature, a radiation dose inside a containment building, a temperature inside the containment building, a pressure inside the containment building, a water level inside an intermediate storage tank, a safe injection flow rate, and a spray flow rate.

An example of the verification is as follows.

For example, when a small loss-of-coolant accident occurs in the cold leg (low and small), the safe injection flow rate needs to be in a low range, and the spray flow rate needs not to be present at the beginning. Therefore, when the safe injection flow rate is in a low range, and the spray flow rate is not present at the beginning in the event of the small loss-of-coolant accident in the cold leg, it is verified that the identification of the accident level is appropriate.

In this way, a separate verification parameter is used to verify whether the identified accident level is reasonable.

The safety feature is operated based on the identified accident level (S400).

The safety feature may include a pilot operated safety relief valve (POSRV), an emergency rapid depressurization valve (ERDV), a safety injection (SI) and a containment spray (CS).

Depending on the accident level, the number of operating POSRVs, whether to operate the ERDV, the number of operating Sis, and the number of operating CSs are varied.

Among them, the ERDV refers to a system that is connected to the pressurizer and depressurizes the reactor so as to be used even when the POSRV is not operating in a serious accident (high radiation environment).

Examples of operating the safety feature according to the accident level are shown in the following Table 2, in which the numerals in the parentheses are the numbers of safety feature installed in the nuclear power plant.

**[Table 2]**

| Combinations | POSRV open (4) | ERDV open (1) | SI operating (4) | CS operating (2) |
|---|---|---|---|---|
| low and large | 4 | 1 | 4 | 2 |
| low and medium | 4 | 1 | 3 | 1 |
| high and large | 2 | 0 | 4 | 2 |
| high and medium | 2 | 0 | 3 | 1 |
| low and small | 0 | 0 | 2 | 0 |
| high and small | 0 | 0 | 2 | 0 |

For example, a large loss-of-coolant accident that occurs in the cold leg is the most serious loss-of-coolant accident. When it is identified that this accident occurs, all four POSRVs and one ERDV are immediately and automatically opened without delay to take measures for significantly reducing the steam pressure in an upper portion of the core. By taking these measures to discharge steam, the water level in the core is effectively restored and the risk of core damage is minimized. Lastly, related information is displayed (S500). The related information may include the water level of the pressurizer, the water level of the reactor head water level indicator, the break size, the break location, the verification parameter, the accident level, the safety feature, etc.

According to the disclosure, the steam pressure in the upper portion of the core is effectively discharged, the accident is accurately identified during the loss-of-coolant accident (LOCA), and an automatic system operates to quickly take measures based on situation identification rather than manual measures of an operator, thereby reducing the probability of core damage.

According to the disclosure, when a large loss-of-coolant accident occurs in the cold leg of the pressurized nuclear power plant, a steam discharge path is effectively and quickly formed. Accordingly, the water level in the core can be remains high to protect the core and lower an expected peak cladding temperature (PCT).

Further, an operating margin, a core design margin, and a design margin of engineered safety feature are increased, and the frequency of core damage related to the loss-of-coolant accidents and the probability of radioactive material leakage due to serious accidents can be minimized.

The aforementioned embodiments are merely examples for describing the disclosure, and the disclosure is not limited thereto. Various modifications from these embodiments can be made by a person, who has ordinary knowledge in the art to which the disclosure pertains, to implement the disclosure, and thus the technical scope of the disclosure should be defined by the appended claims.

## Claims

1. A method of dealing with a loss-of-coolant accident in a nuclear power plant, the method comprising:
identifying a break size and a break location;
identifying an accident level based on the break size and break location; and
operating safety feature based on the accident level.

2. The method of claim 1, wherein the safety feature comprises a pilot operated safety relief valve (POSRV), an emergency rapid depressurization valve (ERDV), a safety injection (SI), and a containment spray (CS).

3. The method of claim 2, wherein
the break size is identified based on a decreasing rate of a water level of a pressurizer, and
the break location is identified based on a water level of a reactor head water level indicator.

4. The method of claim 3, wherein the identification of the break location comprises:
identifying that a hot leg is broken upon the water level of the reactor head water level indicator being above a certain level, and
identifying that a cold leg is broken upon the water level of the reactor head water level indicator being below a certain level.

5. The method of claim 1, wherein the identification of the accident level is based on a look-up table preset according to combinations of the break sizes and the break locations.

6. The method of claim 2, wherein, in the operation of the safety feature, the number of operating POSRVs, whether to operate the ERDV, the number of operating Sis, and the number of operating CSs are varied depending on the accident level.

7. The method of claim 1, wherein, after identifying the accident level, the accident level is verified based on a verification parameter comprising at least one of a core exit temperature, a radiation dose inside a containment building, a temperature inside the containment building, a pressure inside the containment building, a water level inside an intermediate storage tank, a safe injection flow rate, and a spray flow rate.

8. A system for dealing with a loss-of-coolant accident in a nuclear power plant, the system comprising:
an input unit that receives a water level of a pressurizer and a water level of a reactor head water level indicator;
an accident identification unit that identifies a break size based on a decreasing rate of the water level of the pressurizer, and identifies a break location based on the water level of the reactor head water level indicator;
an accident level identification unit that identifies an accident level based on the break size and break location identified by the accident identification unit; and
a safety feature operation unit that instructs safety feature to operate based on the accident level identified by the accident level identification unit.

9. The system of claim 8, wherein the safety feature comprise a pilot operated safety relief valve (POSRV), an emergency rapid depressurization valve (ERDV), a safety injection (SI), and a containment spray (CS).

10. The system of claim 9, wherein the accident identification unit identifies that a hot leg is broken upon the water level of the reactor head water level indicator being above a certain level, and identifies that a cold leg is broken upon the water level of the reactor head water level indicator being below a certain level.

11. The system of claim 10, wherein the accident level identification unit identifies the accident level based on a look-up table preset according to combinations of the break sizes and the break locations.

12. The system of claim 11, further comprising a verification unit that verifies the accident level based on a verification parameter comprising at least one of a core exit temperature, a radiation dose inside a containment building, a temperature inside the containment building, a pressure inside the containment building, a water level inside an intermediate storage tank, a safe injection flow rate, and a spray flow rate.
